# EUROPEAN PATENT APPLICATION

(11) **EP 4 632 954 A1**
(43) Date of publication of application: **15.10.2025**
(21) Application number: 25169380.0
(22) Date of filing: 09.04.2025
(51) Int. Cl.: H01R 4/02, H01M 50/502, H01R 4/34, H01R 11/28, H01R 13/424, H01R 13/502, H01R 4/70, H01R 13/44, H01R 13/52, H01R 13/707

(54) **CONNECTOR**

(30) Priority: 12.04.2024 CN 202420766112 U
(71) Applicant: Tyco Electronics (Shanghai) Co., Ltd., Pilot Free Trade Zone Shanghai 200131 (CN)
(72) Inventor: Feng, Qi, Shanghai, 200233 (CN); Li, Ziwei, Shanghai, 200233 (CN); Yang, Yuchen, Shanghai, 200233 (CN)
(74) Representative: Grünecker Patent- und Rechtsanwälte PartG mbB

(57) **Abstract**

The present invention discloses a connector. The connector comprises: an outer shielding shell (1) which comprises front and rear ports (101) opposite in its longitudinal direction (Y), and a top wall and a bottom opening (102) opposite in its height direction (Z), and an installation port (103) formed in the top wall; an inner insulation housing (2) which is inserted into the outer shielding shell (1) from the rear port (101) of the outer shielding shell (1) and has an insertion cavity (201) communicated with the rear port (101), the bottom opening (102), and the installation port (103) of the outer shielding shell (1); an electric transmission component (3) which is inserted into the insertion cavity (201) of the inner insulation housing (2) and led out from the rear port (101) of the outer shielding shell (1); a conductive terminal (4) which is welded to the front end (3a) of the electric transmission component (3) inserted into the insertion cavity (201) for electrical contact with a mating terminal of a mating connector; an insulation retaining body (5) which is installed in the bottom opening (102) of the outer shielding shell (1) for retaining and positioning the conductive terminal (4); and a fastening assembly (6) which enters the inner insulation housing (2) through the installation port (103) in the top wall of the outer shielding shell (1), for fastening the conductive terminal (4) to the mating terminal. In the present invention, the structure of the connector is simple and the volume is small, which can achieve miniaturization of the connector, and can simultaneously achieve functions such as waterproof sealing, electromagnetic shielding, high-voltage interlocking, and finger protection.

## Description

### CROSS-REFERENCE TO RELATED APPLICATION

This application claims the benefit of Chinese Patent Application No. CN202420766112.7 filed on April 12, 2024 in the State Intellectual Property Office of China, the whole disclosure of which is incorporated herein by reference.

### BACKGROUND OF THE INVENTION

### Field of the Invention

The present invention relates to a connector.

### Description of the Related Art

In the new energy vehicle, the high-voltage bolt connector is a very important component, which is generally used for the electrical connection between the charging seat and the battery, transmitting electrical energy to the charging battery to charge the charging battery in the battery pack. In the prior art, the connector at the charging seat end has the problems of complex structure and large volume, and it is difficult to simultaneously achieve functions such as waterproof sealing, electromagnetic shielding, high-voltage interlocking, and finger protection.

### SUMMARY OF THE INVENTION

The present invention has been made to overcome or alleviate at least one aspect of the above mentioned disadvantages.

According to an aspect of the present invention, there is provided a connector. The connector comprises: an outer shielding shell which comprises front and rear ports opposite in its longitudinal direction, and a top wall and a bottom opening opposite in its height direction, and an installation port formed in the top wall; an inner insulation housing which is inserted into the outer shielding shell from the rear port of the outer shielding shell and has an insertion cavity communicated with the rear port, the bottom opening, and the installation port of the outer shielding shell; an electric transmission component which is inserted into the insertion cavity of the inner insulation housing and led out from the rear port of the outer shielding shell; a conductive terminal which is welded to the front end of the electric transmission component inserted into the insertion cavity for electrical contact with a mating terminal of a mating connector; an insulation retaining body which is installed in the bottom opening of the outer shielding shell for retaining and positioning the conductive terminal; and a fastening assembly which enters the inner insulation housing through the installation port in the top wall of the outer shielding shell, for fastening the conductive terminal to the mating terminal.

According to an exemplary embodiment of the present invention, the electric transmission component comprises a flat metal bar and an outer insulation layer wrapped on the metal bar, the front end of the metal bar is exposed from the outer insulation layer, and the conductive terminal is cylindrical and vertically welded to the front end of the metal bar.

According to another exemplary embodiment of the present invention, the conductive terminal comprises: a first cylindrical part which is located at one end of the conductive terminal; a second cylindrical part which is located at the other end of the conductive terminal; and a flange part located between the first cylindrical part and the second cylindrical part. A socket is formed in the front end of the metal bar, the first cylindrical part is inserted and welded into the socket, the flange part is welded to the surface of the front end of the metal bar, and the end face of the second cylindrical part is used for axial electrical contact with the end face of the mating terminal.

According to another exemplary embodiment of the present invention, the insulation retaining body comprises: an insulation bracket which is fixed to the outer shielding shell and the inner insulation housing; and an insulation sleeve which is formed on the insulation bracket. The second cylindrical part of the conductive terminal is inserted and held in the insulation sleeve of the insulation retaining body.

According to another exemplary embodiment of the present invention, a first elastic buckle and a second elastic buckle are formed on the insulation bracket, and the first elastic buckle and the second elastic buckle are respectively engaged to the outer shielding shell and the inner insulation housing to fix the insulation retaining body to the outer shielding shell and the inner insulation housing.

According to another exemplary embodiment of the present invention, the fastening assembly comprises: a bolt passing through the conductive terminal, for threaded connection with the mating terminal or a nut inside the mating connector, to fasten the conductive terminal to the mating terminal; and an insulation end cap which is fitted or formed on the end of the bolt to prevent human fingers from touching the end of the bolt. The insulation sleeve extends beyond the end face of the second cylindrical part of the conductive terminal, and the insulation end cap is located in the insulation sleeve, with a gap between the insulation end cap and the insulation sleeve smaller than a human finger to prevent finger insertion.

According to another exemplary embodiment of the present invention, the fastening assembly further comprises: a first insulator which is formed on the head of the bolt; a shielding cap for installation onto the installation port of the outer shielding shell; and a second insulator which is formed on the inner side of the shielding cap. The first insulator and the second insulator are engaged together to join the shielding cap and the bolt together and electrically isolate the shielding cap from the bolt; the shielding cap is adapted to cover the installation port and is adapted to make electrical contact with the outer peripheral surface of the peripheral wall of the installation port to prevent electromagnetic leakage.

According to another exemplary embodiment of the present invention, a joint part suitable for engaging with an operating tool is formed on the outer side of the shielding cap, so as to be able to tighten or loosen the bolt through the operating tool engaged with the joint part.

According to another exemplary embodiment of the present invention, the fastening assembly further comprises a sealing ring which is fitted onto the second insulator and is adapted to be radially compressed between the inner peripheral surface of the second insulator and the peripheral wall of the installation port to seal the installation port.

According to another exemplary embodiment of the present invention, the fastening assembly is pre-installed into the inner insulation housing, a limit flange is formed on the first insulator, and a limit protrusion is formed in the inner insulation housing; the limit protrusion is used to interfere with the limit flange to prevent the fastening assembly pre-installed in the inner insulation housing from detaching from the inner insulation housing.

According to another exemplary embodiment of the present invention, the connector comprises two electric transmission components, two conductive terminals, and two fastening assemblies, wherein the two conductive terminals are respectively welded to the front ends of the two electric transmission components; the inner insulation housing has two insertion cavities, the insulation retaining body has two insulation sleeves, and the outer shielding shell has two installation ports; the two electric transmission components are respectively inserted into the two insertion cavities, the two conductive terminals are respectively held in the two insulation sleeves, and the two fastening assemblies enter the inner insulation housing through the two installation ports.

According to another exemplary embodiment of the present invention, the front ends of the two electric transmission components are arranged side by side in the transverse direction of the outer shielding shell and at the same height in the height direction of the outer shielding shell; the outlets of the two insertion cavities of the inner insulation housing are spaced apart in the height direction and at least partially overlap with each other, so that the two electric transmission components led out from the outlets of the two insertion cavities are spaced apart in the height direction and at least partially overlap with each other.

According to another exemplary embodiment of the present invention, the connector further comprises a low-voltage detection terminal which is fixed to the insulation retaining body and located between the two insulation sleeves, for mating with a mating detection terminal of the mating connector. After the connector is mated with the mating connector, the conductive terminal of the connector is electrically connected to the mating terminal of the mating connector to connect a high-voltage load circuit; after the connector is mated with the mating connector, the low-voltage detection terminal is mated with the mating detection terminal to connect a low-voltage control circuit and control the power supply to supply power to the high-voltage load circuit by the low-voltage control circuit.

According to another exemplary embodiment of the present invention, a circle of groove is formed in the bottom wall of the outer shielding shell, which surrounds the bottom opening of the outer shielding shell; when the connector is mated with the mating connector, a peripheral part of a mating shielding shell of the mating connector is inserted into the groove of the outer shielding shell and electrically contacts with the outer shielding shell.

According to another exemplary embodiment of the present invention, the connector further comprises a sealing ring which is installed in the groove of the outer shielding shell; when the connector is mated with the mating connector, the sealing ring is radially compressed between the outer shielding shell and the mating shielding shell to achieve sealing between the two.

According to another exemplary embodiment of the present invention, the connector further comprises a sealing element which is inserted into the rear port of the outer shielding shell for sealing the rear port of the outer shielding shell, the electric transmission component passes through the sealing element, and the sealing element is compressed between an outer insulation layer of the electric transmission component and an inner peripheral surface of the rear port of the outer shielding shell.

According to another exemplary embodiment of the present invention, the connector further comprises a rear end cover which is installed on the rear end of the outer shielding shell and formed with a through-hole allowing the electric transmission component to pass through, the rear end cover is used to fix the electric transmission component to the rear end of the outer shielding shell to prevent the electric transmission component from shaking.

According to another exemplary embodiment of the present invention, an elastic buckle is formed on the rear end cover, and a protrusion is formed on the outer peripheral surface of the rear end of the outer shielding shell, the protrusion is engaged with a snap slot of the elastic buckle to fix the rear end cover to the rear end of the outer shielding shell.

According to another exemplary embodiment of the present invention, the sealing element has two ends opposite in the longitudinal direction of the outer shielding shell, and the two ends of the sealing element are respectively pressed against the rear end face of the inner insulation housing and the rear end cover to position the sealing element in the rear port of the outer shielding shell.

In the aforementioned exemplary embodiments according to the present invention, the structure of the connector is simple, the volume is small, and the miniaturization of the connector can be achieved. Moreover, it can simultaneously achieve functions such as waterproof sealing, electromagnetic shielding, high-voltage interlocking, and finger protection.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of a connector according to an exemplary embodiment of the present invention;
Figure 2 shows a longitudinal sectional view of a connector according to an exemplary embodiment of the present invention when viewed from the top;
Figure 3 shows a longitudinal sectional view of a connector according to an exemplary embodiment of the present invention when viewed from the bottom;
Figure 4 shows an illustrative perspective view of the outer shielding shell and inner insulation housing of a connector according to an exemplary embodiment of the present invention;
Figure 5 shows an illustrative perspective view of a connector according to an exemplary embodiment of the present invention, where one fastening assembly has not yet been pre-installed into the inner insulation housing;
Figure 6 shows a longitudinal sectional view of a connector according to an exemplary embodiment of the present invention, wherein the fastening assembly is pre-installed into the inner insulation housing and retained within the inner insulation housing;
Figure 7 shows a longitudinal sectional view of a connector according to an exemplary embodiment of the present invention, wherein the low voltage detection terminal is shown;
Figure 8 shows an illustrative perspective view of a fastening assembly of a connector according to an exemplary embodiment of the present invention;
Figure 9 shows a cross-sectional view of the fastening assembly of a connector according to an exemplary embodiment of the present invention;
Figure 10 shows an illustrative exploded view of the fastening assembly of a connector according to an exemplary embodiment of the present invention;
Figure 11 shows an illustrative perspective view of two electric transmission components of a connector according to an exemplary embodiment of the present invention;
Figure 12 shows a cross-sectional view of the fastening assembly, electric transmission component, and conductive terminal of a connector according to an exemplary embodiment of the present invention; and
Figure 13 shows an illustrative exploded view of the fastening assembly, electric transmission component, and conductive terminal of a connector according to an exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

**In** the following detailed description, for purposes of explanation, numerous specific details are set forth in order to provide a thorough understanding of the disclosed embodiments. It will be apparent, however, that one or more embodiments may be practiced without these specific details. **In** other instances, well-known structures and devices are schematically shown in order to simplify the drawing.

According to a general concept of the present invention, there is provided a connector. The connector comprises: an outer shielding shell which comprises front and rear ports opposite in its longitudinal direction, and a top wall and a bottom opening opposite in its height direction, and an installation port formed in the top wall; an inner insulation housing which is inserted into the outer shielding shell from the rear port of the outer shielding shell and has an insertion cavity communicated with the rear port, the bottom opening, and the installation port of the outer shielding shell; an electric transmission component which is inserted into the insertion cavity of the inner insulation housing and led out from the rear port of the outer shielding shell; a conductive terminal which is welded to the front end of the electric transmission component inserted into the insertion cavity for electrical contact with a mating terminal of a mating connector; an insulation retaining body which is installed in the bottom opening of the outer shielding shell for retaining and positioning the conductive terminal; and a fastening assembly which enters the inner insulation housing through the installation port in the top wall of the outer shielding shell, for fastening the conductive terminal to the mating terminal.

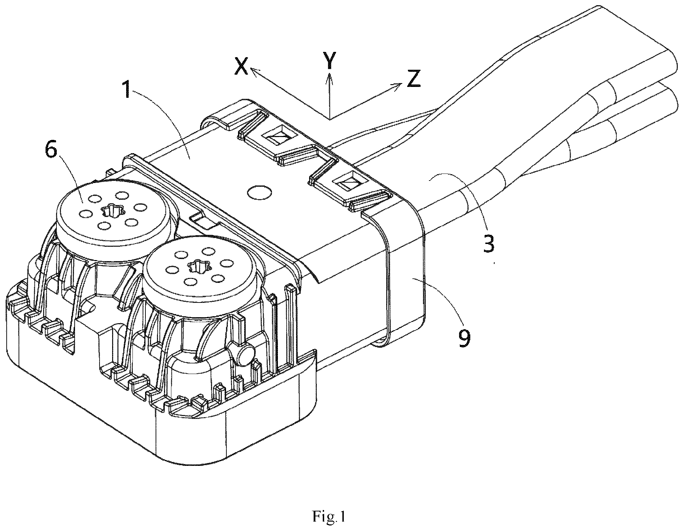

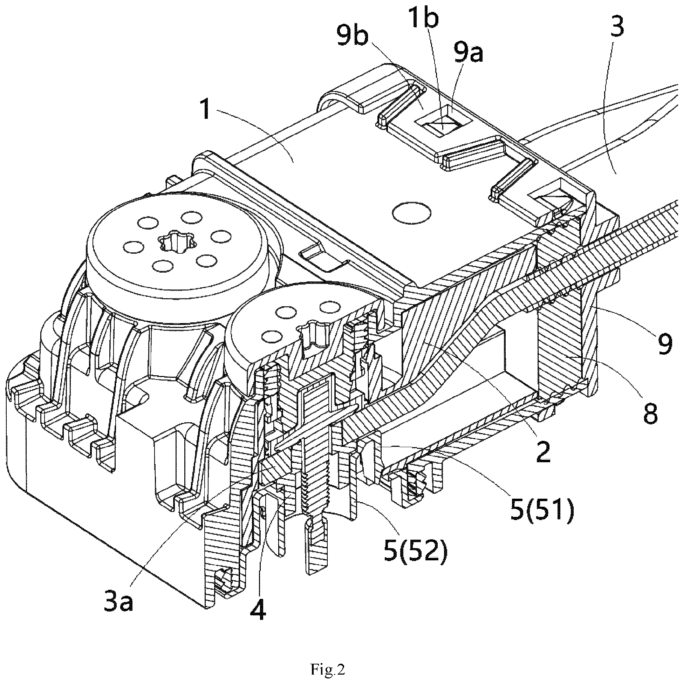

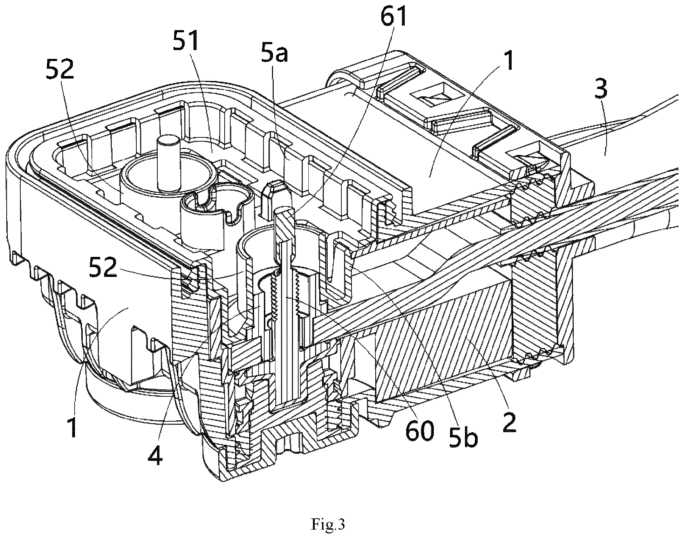

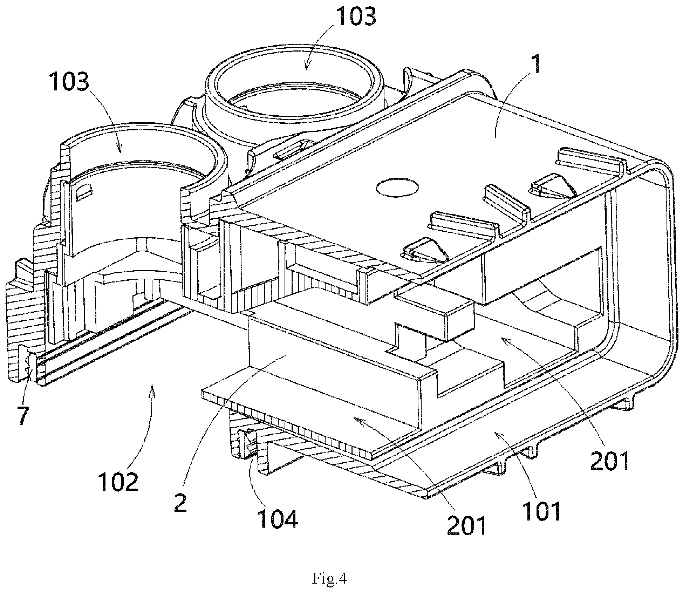

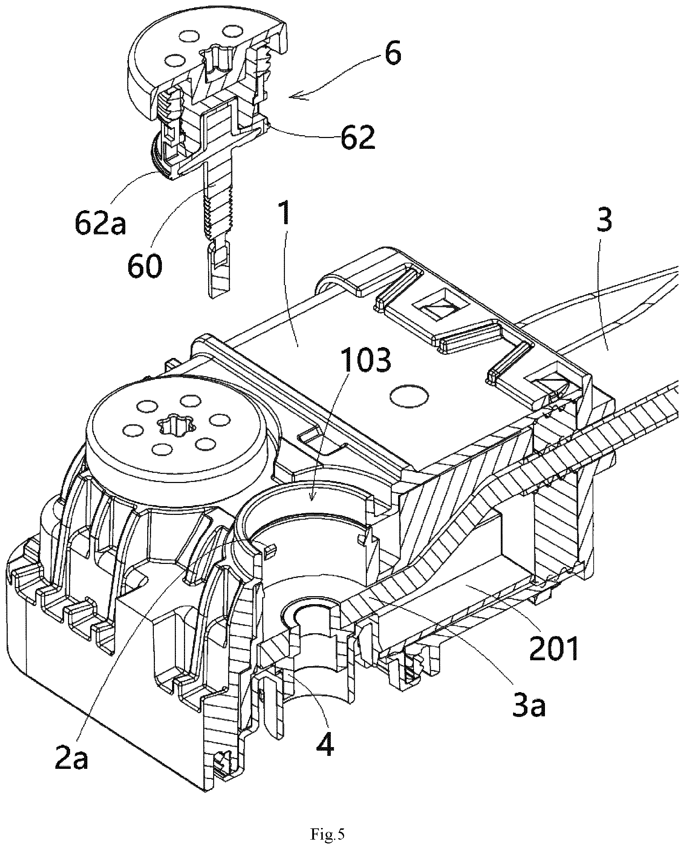

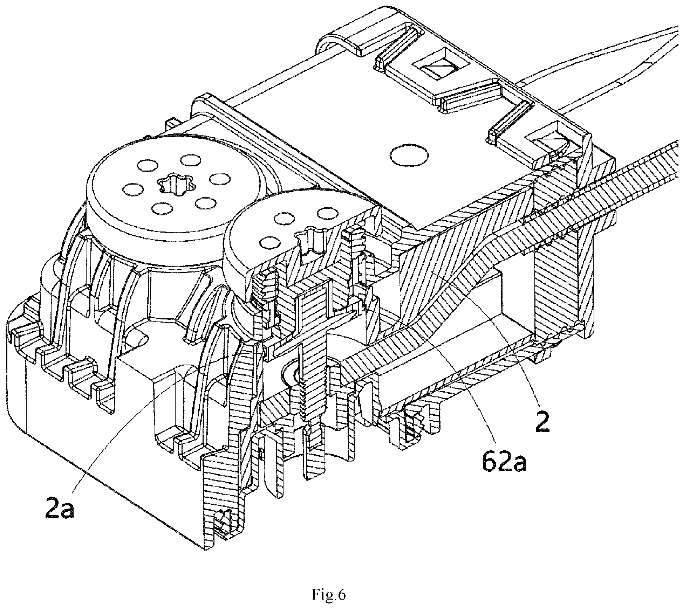

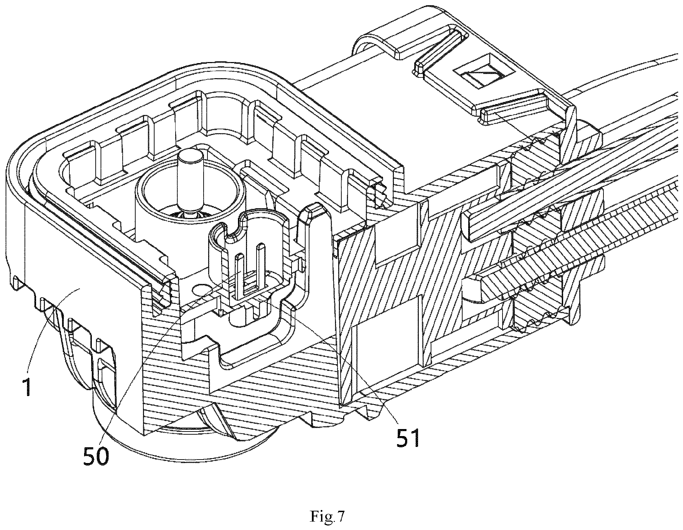

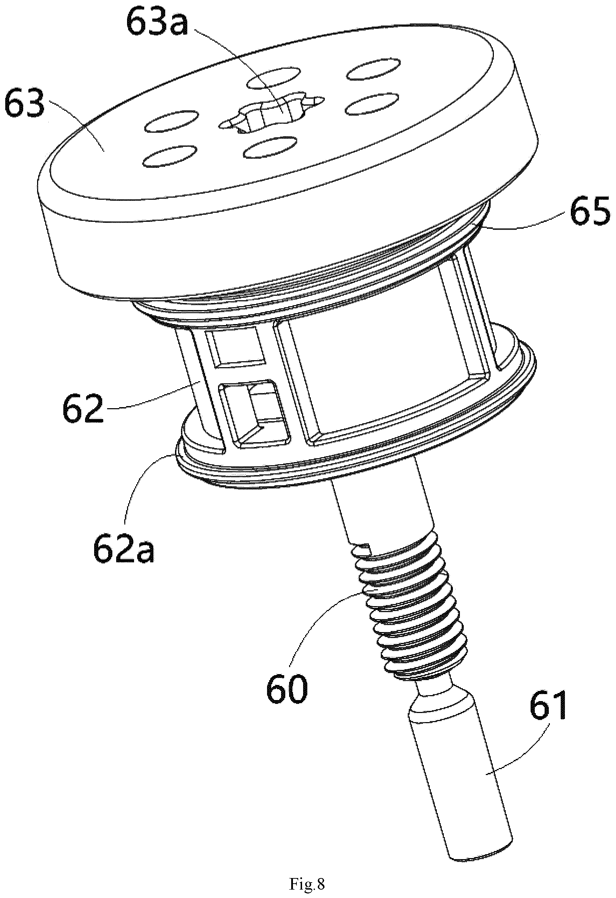

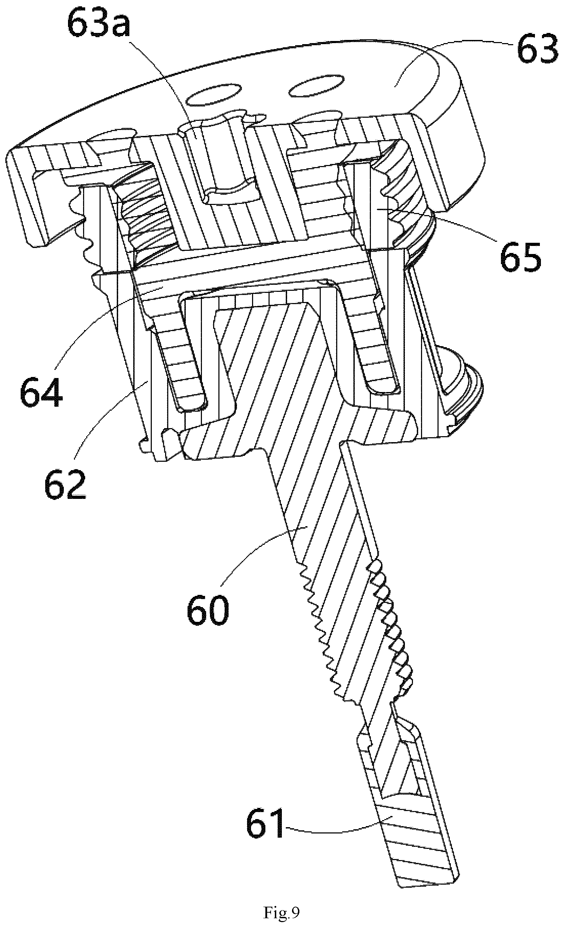

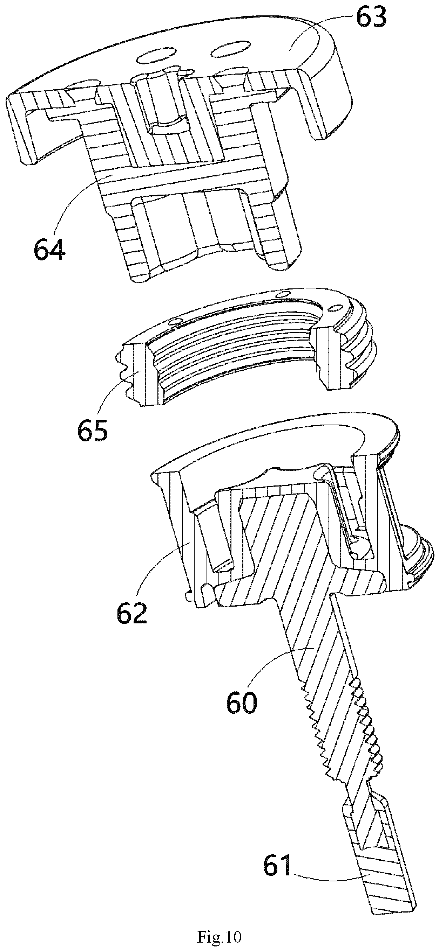

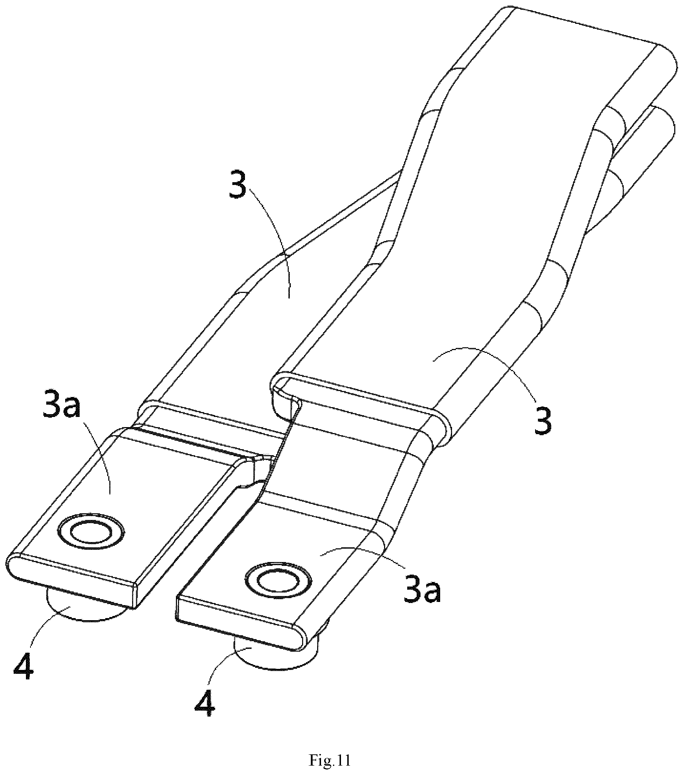

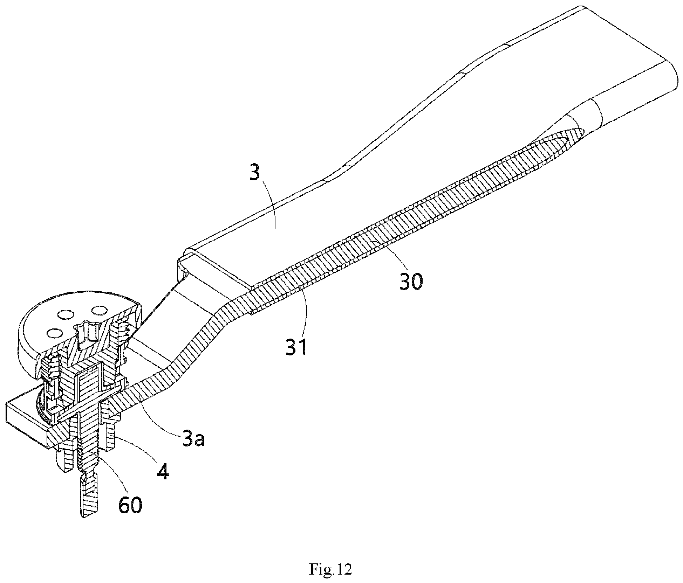

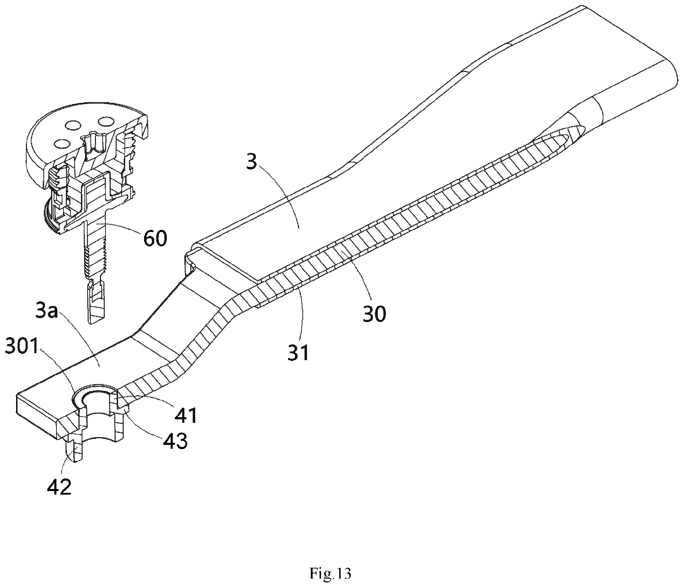

Figure 1 shows an illustrative perspective view of a connector according to an exemplary embodiment of the present invention; Figure 2 shows a longitudinal sectional view of a connector according to an exemplary embodiment of the present invention when viewed from the top; Figure 3 shows a longitudinal sectional view of a connector according to an exemplary embodiment of the present invention when viewed from the bottom; Figure 4 shows an illustrative perspective view of the outer shielding shell 1 and inner insulation housing 2 of a connector according to an exemplary embodiment of the present invention; Figure 5 shows an illustrative perspective view of a connector according to an exemplary embodiment of the present invention, in which one fastening assembly 6 has not yet been pre-installed into the inner insulation housing 2; Figure 6 shows a longitudinal sectional view of a connector according to an exemplary embodiment of the present invention, wherein the fastening assembly 6 is pre-installed into the inner insulation housing 2 and held in place within the inner insulation housing 2; Figure 7 shows a longitudinal sectional view of a connector according to an exemplary embodiment of the present invention, wherein the low voltage detection terminal 50 is shown; Figure 8 shows an illustrative perspective view of the fastening assembly 6 of a connector according to an exemplary embodiment of the present invention; Figure 9 shows a cross-sectional view of the fastening assembly 6 of a connector according to an exemplary embodiment of the present invention; Figure 10 shows an illustrative exploded view of the fastening assembly 6 of a connector according to an exemplary embodiment of the present invention; Figure 11 shows an illustrative perspective view of two electric transmission components 3 of a connector according to an exemplary embodiment of the present invention; Figure 12 shows a cross-sectional view of the fastening assembly 6, electric transmission component 3, and conductive terminal 4 of a connector according to an exemplary embodiment of the present invention; Figure 13 shows an illustrative exploded view of the fastening assembly 6, electric transmission component 3, and conductive terminal 4 of a connector according to an exemplary embodiment of the present invention.

As shown in Figures 1 to 13, in an exemplary embodiment of the present invention, a connector is disclosed. The connector includes: an outer shielding shell 1, an inner insulation housing 2, an electric transmission component 3, a conductive terminal 4, an insulation retaining body 5, and a fastening assembly 6. The outer shielding shell 1 includes a front end wall and a rear port 101 that are opposite in its longitudinal direction Y, and a top wall and a bottom opening 102 that are opposite in its height direction Z. An installation port 103 is formed in the top wall of the outer shielding shell 1. The inner insulation housing 2 is inserted into the outer shielding shell 1 from the rear port 101 of the outer shielding shell 1 and has an insertion cavity 201 that communicates with the rear port 101, bottom opening 102, and installation port 103 of the outer shielding shell 1. The electric transmission component 3 is inserted into the insertion cavity 201 of the inner insulation housing 2 and led out from the rear port 101 of the outer shielding shell 1. The conductive terminal 4 is soldered to the front end 3a of the electric transmission component 3 inserted into the aforementioned insertion cavity 201, for electrical contact with a mating terminal (not shown) of a mating connector (not shown). The insulation retaining body 5 is installed in the bottom opening 102 of the outer shielding shell 1 to hold and position the conductive terminal 4. The fastening assembly 6 enters the inner insulation housing 2 through the installation port 103 in the top wall of the outer shielding shell 1, and is used to fasten the conductive terminal 4 to the mating terminal.

As shown in Figures 1 to 13, in the illustrated embodiment, the electric transmission component 3 includes a flat metal bar 30 and an outer insulation layer 31 wrapped around the metal bar 30. The front end 3a of the metal bar 30 is exposed from the outer insulation layer 31, and the conductive terminal 4 is cylindrical and vertically welded to the front end 3a of the metal bar 30. In an exemplary embodiment of the present invention, the aforementioned metal bar 30 can be an aluminum bar, which can reduce manufacturing costs.

As shown in Figures 1 to 13, in the illustrated embodiment, the conductive terminal 4 includes a first cylindrical part 41, a second cylindrical part 42, and a flange part 43. The first cylindrical part 41 is located at one end of the conductive terminal 4. The second cylindrical part 42 is located at the other end of the conductive terminal 4. The flange part 43 is located between the first cylindrical part 41 and the second cylindrical part 42. A socket 301 is formed in the front end 3a of the metal bar 30. The first cylindrical part 41 is inserted and welded into the socket 301, the flange part 43 is welded to the surface of the front end 3a of the metal bar 30, and the end face of the second cylindrical part 42 is used for axial electrical contact with the end face of the mating terminal.

As shown in Figures 1 to 13, in the illustrated embodiment, the insulation retaining body 5 includes an insulation bracket 51 and an insulation sleeve 52. The insulation bracket 51 is fixed to the outer shielding shell 1 and the inner insulation housing 2. The insulation sleeve 52 is formed on the insulation bracket 51. The second cylindrical part 42 of the conductive terminal 4 is inserted and held in the insulation sleeve 52 of the insulation retaining body 5.

As shown in Figures 1 to 13, in the illustrated embodiment, a first elastic buckle 5a and a second elastic buckle 5b are formed on the insulation bracket 51. The first elastic buckle 5a and the second elastic buckle 5b are respectively engaged to the outer shielding shell 1 and the inner insulation housing 2 to fix the insulation retaining body 5 to the outer shielding shell 1 and the inner insulation housing 2.

As shown in Figures 1 to 13, in the illustrated embodiment, the fastening assembly 6 includes a bolt 60 and an insulation end cap 61. The bolt 60 passes through the conductive terminal 4 and is used for threaded connection with the mating terminal or a nut inside the mating connector, to secure the conductive terminal 4 to the mating terminal. The insulation end cap 61 is fitted or formed on the end of bolt 60 to prevent human fingers from touching the end of bolt 60. The insulation sleeve 52 extends beyond the end face of the second cylindrical part 42 of the conductive terminal 4, and the insulation end cap 61 is located in the insulation sleeve 52. The gap between the insulation end cap 61 and the insulation sleeve 52 is smaller than that of a human finger to prevent finger insertion. In an exemplary embodiment of the present invention, the insulation end cap 61 may be an injection molded part directly formed on the end of the bolt 60 through an embedded injection molding process.

As shown in Figures 1 to 13, in the illustrated embodiment, the fastening assembly 6 further comprises a first insulator 62, a shielding cap 63, and a second insulator 64. The first insulator 62 is formed on the head of bolt 60. The shielding cap 63 is used for installation onto the installation port 103 of the outer shielding shell 1. The second insulator 64 is formed on the inner side of the shielding cap 63. The first insulator 62 and the second insulator 64 are engaged together to connect the shielding cap 63 and the bolt 60, and to electrically isolate the shielding cap 63 from the bolt 60. In an exemplary embodiment of the present invention, the first insulator 62 may be an injection molded part directly formed on the head of the bolt 60 through an insert injection molding process. The second insulator 64 can be an injection molded part directly formed on the inner side of the shielding cap 63 through an embedded injection molding process. The shielding cap 63 is suitable for covering the installation port 103 and for making electrical contact with the outer peripheral surface of the peripheral wall of the installation port 103 to prevent electromagnetic leakage.

As shown in Figures 1 to 13, in the illustrated embodiment, a joint part 63a suitable for engagement with an operating tool (not shown) is formed on the outer side of the shielding cap 63, so as to be able to tighten or loosen the bolt 60 through the operating tool engaged with the joint part 63a. **In** the illustrated embodiment, the joint part 63a is a concave part with a cross section in the shape of a plum blossom.

As shown in Figures 1 to 13, in the illustrated embodiment, the fastening assembly 6 further comprises a sealing ring 65, which is fitted onto the second insulator 64 and is adapted to be radially compressed between the second insulator 64 and the inner peripheral surface of the peripheral wall of the installation port 103 to seal the installation port 103.

As shown in Figures 1 to 13, in the illustrated embodiment, the fastening assembly 6 is pre-installed into the inner insulation housing 2, a limit flange 12c is formed on the first insulator 62, a limit protrusion 2a is formed in the inner insulation housing 2. The limit protrusion 2a is used to interfere with the limit flange 12c to prevent the fastening assembly 6 pre-installed in the inner insulation housing 2 from detaching from the inner insulation housing 2.

As shown in Figures 1 to 13, in the illustrated embodiment, the connector includes two electric transmission components 3, two conductive terminals 4, and two fastening assemblies 6. The two conductive terminals 4 are respectively welded to the front ends 3a of the two electric transmission components 3. The inner insulation housing 2 has two insertion cavities 201, the insulation retaining body 5 has two insulation sleeves 52, and the outer shielding shell 1 has two installation ports 103. Two electric transmission components 3 are respectively inserted into two insertion cavities 201, two conductive terminals 4 are respectively held in two insulation sleeves 52, and two fastening assemblies 6 enter the inner insulation housing 2 through two installation ports 103.

As shown in Figures 1 to 13, in the illustrated embodiment, the front ends 3a of two electric transmission components 3 are arranged side by side in the transverse direction X of the outer shielding shell 1 and at the same height in the height direction Z of the outer shielding shell 1. The outlets of the two insertion cavities 201 of the inner insulation housing 2 are spaced apart in the height direction Z and at least partially overlap with each other, so that the two electric transmission components 3 led out from the outlets of the two insertion cavities 201 are spaced apart in the height direction Z and at least partially overlap with each other.

As shown in Figures 1 to 13, in the illustrated embodiment, the connector further includes a low-voltage detection terminal 50, which is fixed to the insulation retaining body 5 and located between two insulation sleeves 52 for mating with a mating detection terminal (not shown) of the mating connector. After the connector is mated with the mating connector, the conductive terminal 4 of the connector is electrically connected to the mating terminal of the mating connector to connect a high-voltage load circuit (not shown). After the connector is mated with the mating connector, the low-voltage detection terminal 50 is mated with the mating detection terminal to connect a low-voltage control circuit (not shown) and control the power supply to supply power to the high-voltage load circuit by the low-voltage control circuit. This can improve the safety of use.

As shown in Figures 1 to 13, in the illustrated embodiment, a circular of groove 104 is formed in the bottom wall of the outer shielding shell 1, and the groove 104 surrounds the bottom opening 102 of the outer shielding shell 1. When the connector is mated with the mating connector, the peripheral part of the mating shielding shell (not shown) of the mating connector is inserted into the groove 104 of the outer shielding shell 1 and electrically contacts with the outer shielding shell 1.

As shown in Figures 1 to 13, in the illustrated embodiment, the connector further comprises a sealing ring 7, which is installed in the groove 104 of the outer shielding shell 1. When the connector is mated with the mating connector, the sealing ring 7 is radially compressed between the outer shielding shell 1 and the mating shielding shell to achieve sealing between the two.

As shown in Figures 1 to 13, in the illustrated embodiment, the connector further includes a sealing element 8. The seal element 8 is inserted into the rear port 101 of the outer shielding shell 1 for sealing the rear port 101 of the outer shielding shell 1. The electric transmission component 3 passes through the sealing element 8, and the sealing element 8 is compressed between the outer insulation layer 31 of the electric transmission component 3 and the inner peripheral surface of the rear port 101 of the outer shielding shell 1.

As shown in Figures 1 to 13, in the illustrated embodiment, the connector further includes a rear end cover 9. The rear end cover 9 is installed on the rear end of the outer shielding shell 1 and formed with a through-hole that allows the electric transmission component 3 to pass through. The rear end cover 9 is used to fix the electric transmission component 3 to the rear end of the outer shielding shell 1 to prevent the electric transmission component 3 from shaking.

As shown in Figures 1 to 13, in the illustrated embodiment, an elastic buckle 9b is formed on the rear end cover 9, and a protrusion 1b is formed on the outer peripheral surface of the rear end of the outer shielding shell 1. The protrusion 1b is engaged with a snap slot 9a of the elastic buckle 9b to fix the rear end cover 9 to the rear end of the outer shielding shell 1.

As shown in Figures 1 to 13, in the illustrated embodiment, the sealing element 8 has two ends opposite in the longitudinal direction Y of the outer shielding shell 1, and the two ends of the sealing element 8 are respectively pressed against the rear end face of the inner insulation housing 2 and the rear end cover 9 to position the sealing element 8 in the rear port 101 of the outer shielding shell 1.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A connector, comprising:
an outer shielding shell (1) which comprises front and rear ports (101) opposite in its longitudinal direction (Y), and a top wall and a bottom opening (102) opposite in its height direction (Z), and an installation port (103) formed in the top wall;
an inner insulation housing (2) which is inserted into the outer shielding shell (1) from the rear port (101) of the outer shielding shell (1) and has an insertion cavity (201) communicated with the rear port (101), the bottom opening (102), and the installation port (103) of the outer shielding shell (1);
an electric transmission component (3) which is inserted into the insertion cavity (201) of the inner insulation housing (2) and led out from the rear port (101) of the outer shielding shell (1);
a conductive terminal (4) which is welded to the front end (3a) of the electric transmission component (3) inserted into the insertion cavity (201) for electrical contact with a mating terminal of a mating connector;
an insulation retaining body (5) which is installed in the bottom opening (102) of the outer shielding shell (1) for retaining and positioning the conductive terminal (4); and
a fastening assembly (6) which enters the inner insulation housing (2) through the installation port (103) in the top wall of the outer shielding shell (1), for fastening the conductive terminal (4) to the mating terminal.

2. The connector according to claim 1,
wherein the electric transmission component (3) comprises a flat metal bar (30) and an outer insulation layer (31) wrapped on the metal bar (30), the front end (3a) of the metal bar (30) is exposed from the outer insulation layer (31), and the conductive terminal (4) is cylindrical and vertically welded to the front end (3a) of the metal bar (30).

3. The connector according to claim 1,
wherein the conductive terminal (4) comprises:
a first cylindrical part (41) which is located at one end of the conductive terminal (4);
a second cylindrical part (42) which is located at the other end of the conductive terminal (4); and
a flange part (43) located between the first cylindrical part (41) and the second cylindrical part (42),
wherein a socket (301) is formed in the front end (3a) of the metal bar (30), the first cylindrical part (41) is inserted and welded into the socket (301), the flange part (43) is welded to the surface of the front end (3a) of the metal bar (30), and the end face of the second cylindrical part (42) is used for axial electrical contact with the end face of the mating terminal.

4. The connector according to claim 3,
wherein the insulation retaining body (5) comprises:
an insulation bracket (51) which is fixed to the outer shielding shell (1) and the inner insulation housing (2); and
an insulation sleeve (52) which is formed on the insulation bracket (51),
wherein the second cylindrical part (42) of the conductive terminal (4) is inserted and held in the insulation sleeve (52) of the insulation retaining body (5).

5. The connector according to claim 4,
wherein a first elastic buckle (5a) and a second elastic buckle (5b) are formed on the insulation bracket (51), and the first elastic buckle (5a) and the second elastic buckle (5b) are respectively engaged to the outer shielding shell (1) and the inner insulation housing (2) to fix the insulation retaining body (5) to the outer shielding shell (1) and the inner insulation housing (2).

6. The connector according to claim 4,
wherein the fastening assembly (6) comprises:
a bolt (60) passing through the conductive terminal (4), for threaded connection with the mating terminal or a nut inside the mating connector, to fasten the conductive terminal (4) to the mating terminal; and
an insulation end cap (61) which is fitted or formed on the end of the bolt (60) to prevent human fingers from touching the end of the bolt (60),
wherein the insulation sleeve (52) extends beyond the end face of the second cylindrical part (42) of the conductive terminal (4), and the insulation end cap (61) is located in the insulation sleeve (52), with a gap between the insulation end cap (61) and the insulation sleeve (52) smaller than a human finger to prevent finger insertion.

7. The connector according to claim 6,
wherein the fastening assembly (6) further comprises:
a first insulator (62) which is formed on the head of the bolt (60);
a shielding cap (63) for installation onto the installation port (103) of the outer shielding shell (1); and
a second insulator (64) which is formed on the inner side of the shielding cap (63),
wherein the first insulator (62) and the second insulator (64) are engaged together to join the shielding cap (63) and the bolt (60) together and electrically isolate the shielding cap (63) from the bolt (60);
wherein the shielding cap (63) is adapted to cover the installation port (103) and is adapted to make electrical contact with the outer peripheral surface of the peripheral wall of the installation port (103) to prevent electromagnetic leakage.

8. The connector according to claim 7,
wherein a joint part (63a) suitable for engaging with an operating tool is formed on the outer side of the shielding cap (63), so as to be able to tighten or loosen the bolt (60) through the operating tool engaged with the joint part (63a).

9. The connector according to claim 7,
wherein the fastening assembly (6) further comprises:
a sealing ring (65) which is fitted onto the second insulator (64) and is adapted to be radially compressed between the inner peripheral surface of the second insulator (64) and the peripheral wall of the installation port (103) to seal the installation port (103).

10. The connector according to claim 7,
wherein the fastening assembly (6) is pre-installed into the inner insulation housing (2), a limit flange (11a) is formed on the first insulator (62), and a limit protrusion (2a) is formed in the inner insulation housing (2);
wherein the limit protrusion (2a) is used to interfere with the limit flange (11a) to prevent the fastening assembly (6) pre-installed in the inner insulation housing (2) from detaching from the inner insulation housing (2).

11. The connector according to any one of claims 3-10,
wherein the connector comprises two electric transmission components (3), two conductive terminals (4), and two fastening assemblies (6), wherein the two conductive terminals (4) are respectively welded to the front ends (3a) of the two electric transmission components (3);
wherein the inner insulation housing (2) has two insertion cavities (201), the insulation retaining body (5) has two insulation sleeves (52), and the outer shielding shell (1) has two installation ports (103);
wherein the two electric transmission components (3) are respectively inserted into the two insertion cavities (201), the two conductive terminals (4) are respectively held in the two insulation sleeves (52), and the two fastening assemblies (6) enter the inner insulation housing (2) through the two installation ports (103).

12. The connector according to claim 11,
wherein the front ends (3a) of the two electric transmission components (3) are arranged side by side in the transverse direction (X) of the outer shielding shell (1) and at the same height in the height direction (Z) of the outer shielding shell (1);
wherein the outlets of the two insertion cavities (201) of the inner insulation housing (2) are spaced apart in the height direction (Z) and at least partially overlap with each other, so that the two electric transmission components (3) led out from the outlets of the two insertion cavities (201) are spaced apart in the height direction (Z) and at least partially overlap with each other.

13. The connector according to claim 11, further comprising:
a low-voltage detection terminal (50) which is fixed to the insulation retaining body (5) and located between the two insulation sleeves (52), for mating with a mating detection terminal of the mating connector,
wherein after the connector is mated with the mating connector, the conductive terminal (4) of the connector is electrically connected to the mating terminal of the mating connector to connect a high-voltage load circuit;
wherein after the connector is mated with the mating connector, the low-voltage detection terminal (50) is mated with the mating detection terminal to connect a low-voltage control circuit and control the power supply to supply power to the high-voltage load circuit by the low-voltage control circuit.

14. The connector according to claim 1,
wherein a circle of groove (104) is formed in the bottom wall of the outer shielding shell (1), which surrounds the bottom opening (102) of the outer shielding shell (1); and
wherein when the connector is mated with the mating connector, a peripheral part of a mating shielding shell of the mating connector is inserted into the groove (104) of the outer shielding shell (1) and electrically contacts with the outer shielding shell (1).

15. The connector according to claim 14, further comprising:
a sealing ring (7) which is installed in the groove (104) of the outer shielding shell (1),
wherein when the connector is mated with the mating connector, the sealing ring (7) is radially compressed between the outer shielding shell (1) and the mating shielding shell to achieve sealing between the two.

16. The connector according to claim 2, further comprising:
a sealing element (8) which is inserted into the rear port (101) of the outer shielding shell (1) for sealing the rear port (101) of the outer shielding shell (1),
wherein the electric transmission component (3) passes through the sealing element (8), and the sealing element (8) is compressed between an outer insulation layer (31) of the electric transmission component (3) and an inner peripheral surface of the rear port (101) of the outer shielding shell (1).

17. The connector according to claim 16, further comprising:
a rear end cover (9) which is installed on the rear end of the outer shielding shell (1) and formed with a through-hole allowing the electric transmission component (3) to pass through,
wherein the rear end cover (9) is used to fix the electric transmission component (3) to the rear end of the outer shielding shell (1) to prevent the electric transmission component (3) from shaking.

18. The connector according to claim 17,
wherein an elastic buckle (9b) is formed on the rear end cover (9), and a protrusion (1b) is formed on the outer peripheral surface of the rear end of the outer shielding shell (1), the protrusion (1b) is engaged with a snap slot (9a) of the elastic buckle (9b) to fix the rear end cover (9) to the rear end of the outer shielding shell (1).

19. The connector according to claim 17,
wherein the sealing element (8) has two ends opposite in the longitudinal direction (Y) of the outer shielding shell (1), and the two ends of the sealing element (8) are respectively pressed against the rear end face of the inner insulation housing (2) and the rear end cover (9) to position the sealing element (8) in the rear port (101) of the outer shielding shell (1).
